# FASCICULE DE BREVET EUROPEEN

(11) **EP 2 502 450 B1**
(45) Date de publication et mention de la délivrance du brevet: **25.07.2018**
(21) Numéro de dépôt: 10795428.1
(22) Date de dépôt: 10.11.2010
(51) Int. Cl.: H04W 52/02

(54) **PROCEDE ET SYSTEME D'ECONOMIE D'ENERGIE DANS UN TERMINAL MOBILE**
VERFAHREN UND SYSTEM ZUM SPAREN VON ENERGIE IN EINEM MOBILEN ENDGERÄT
METHOD AND SYSTEM FOR SAVING ENERGY IN A MOBILE TERMINAL

(30) Priorité: 16.11.2009 FR 0905503
(43) Date de publication de la demande: 26.09.2012
(73) Titulaire: Alcatel Lucent, 91620 Nozay (FR)
(72) Inventeur: HEBBAR, Abdelkrim, F-91620 Nozay (FR); MAARADJI, Abderrahmane, F-91620 Nozay (FR); BIZOUARN, Erick, F-91620 Nozay (FR)
(74) Mandataire: Nokia Bell Patent Attorneys
(86) Numéro de dépôt international: PCT/FR2010/052415
(87) Numéro de publication internationale: WO 2011/058279

(56) Documents cités:
- WO-A1-01/73959
- WO-A2-01/92992
- WO-A2-02/03719
- US-A1- 2002 127 967
- US-A1- 2004 042 417
- US-A1- 2008 285 494
- US-B1- 6 330 446

## Description

L'invention concerne les appareils électriques rechargeables en connexion sans fil à un réseau de communication, tels que les terminaux mobiles de communication ou analogues.

On entend, ici, par « terminal mobile » tout équipement utilisateur portatif, ayant une autonomie en énergie limitée dans le temps. A titre d'exemples non-limitatifs de terminaux mobiles, on cite un téléphone portable, un PDA (Personal Digital Assistant) ou un téléphone dit intelligent (smartphone). Selon d'autres terminologies, un terminal mobile est aussi parfois désigné par l'expression «station mobile» ou «équipement mobile».

Ces terminaux mobiles sont généralement connectés en liaison sans fil à un réseau de communication tel qu'un Réseau Terrestre Mobile Public de Communications (GSM, GPRS, W-CDMA, UMTS, WIMAX ou LTE par exemple), le réseau GPS ou un réseau sans fil de faible porté (Wifi, Wireless LAN, Home RF ou ZigBee par exemple). Pour cela, ces terminaux mobiles sont pourvus de modules d'interaction (émission/réception) radio avec le(s) réseau(x) de communication au(x)quels ils sont connectés.

Afin, par exemple,
- d'être, constamment, apte à recevoir d'éventuelles interactions (un appel entrant ou un message par exemple) ; ou
- de signaler continuellement sa présence (déterminer le noeud de rattachement par exemple),
Il appartient au terminal mobile d'échanger périodiquement des messages de contrôle avec des noeuds, qui sont généralement fixes, du réseau de communication auquel il est connecté.

Selon certaines terminologies, ces messages de contrôle sont appelés pagination (ou paging en anglais). L'envoi de ces messages de contrôle, via l'interface d'émission du terminal mobile, est itéré dans le temps.

Cependant, cet échange périodique des messages de contrôle avec le réseau de communication impacte forcément la consommation énergétique et, par conséquent, l'autonomie des ressources énergétiques (notamment les batteries) embarquées dans le terminal mobile.

En effet, émettre un message de contrôle engendre, automatiquement, une consommation d'énergie ce qui risque de compromettre fortement la durée d'autonomie du terminal mobile.

Le document WO01/92992A2 décrit un procédé pour modifier le taux avec lequel sont transmises des balises de diffusion.

Un objet de la présente invention est d'optimiser l'autonomie en énergie d'un terminal mobile.

Un autre objet de la présente invention est de mieux servir l'essor de la mobilité des terminaux mobiles.

Un autre objet de la présente invention est d'optimiser la fréquence d'envoi, par un terminal mobile, des messages de contrôle.

Un autre objet de la présente invention est de permettre un cadencement automatique optimisé des messages de contrôles émis par un terminal mobile.

Un autre objet de la présente invention est de fournir un meilleur compromis entre l'efficacité de l'émission des messages de contrôle et le coût qu'elle engendre en termes de ressources énergétiques.

À cet effet, l'invention propose, suivant un premier aspect, un procédé d'économie d'énergie dans un terminal mobile selon la revendication 1.

Avantageusement,
- la transition d'une période de non-emploi à une période d'emploi est obtenue dès la détection d'un mouvement du terminal mobile pendant une temporisation prédéfinie de période de non-emploi, ou dès l'écoulement de cette temporisation ; et
- la transition d'une période d'emploi à une période de non-emploi est obtenue dès que le terminal mobile n'est pas en communication et qu'aucun mouvement du terminal mobile n'est détecté pendant une temporisation prédéfinie de période d'emploi.

L'invention se rapporte, selon un deuxième aspect, à un terminal mobile selon la revendication 7.

L'invention propose, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

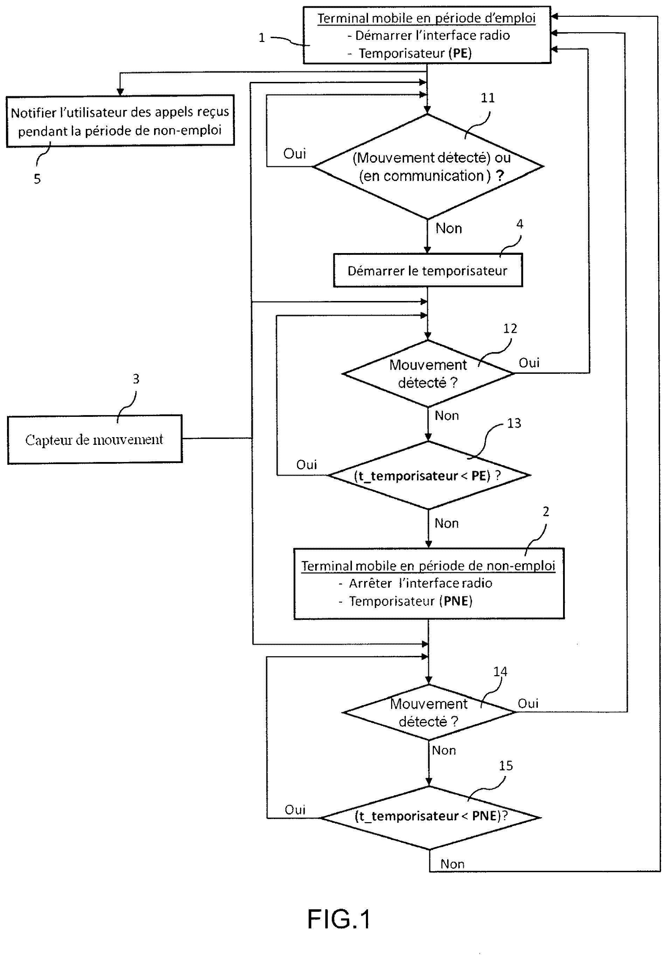

D'autres caractéristiques et avantages de l'invention apparaîtront plus clairement et de manière concrète à la lecture de la description ci-après de modes de réalisation préférés, laquelle est faite en référence à la figure 1 qui illustre graphiquement les étapes de transition entre deux modes de fonctionnement de consommations énergétiques différentes d'un terminal mobile.

On distingue, ci-après, deux types de périodes pour un terminal mobile, à savoir :
- une période d'emploi du terminal mobile ; et
- une période de non-emploi du terminal mobile.

Par « période de non-emploi » on désigne, ici, la période durant laquelle aucune force mécanique n'est appliquée au terminal mobile. Typiquement, le terminal est en appui simple sur un support (une table, un tiroir, le sol, une table de nuit par exemple).

En particulier, on peut considérer, compte tenu d'une utilisation habituelle d'un terminal mobile, que l'absence de sollicitations mécaniques par un utilisateur sur son terminal mobile correspond à une période de non-emploi de ce terminal mobile. A défaut, le terminal mobile est dit en période d'emploi. Autrement dit, si une force est appliquée au terminal mobile, provoquant son mouvement ou sa manipulation, alors le terminal mobile est supposé en période d'emploi. A titre d'exemple, si le terminal mobile est porté, directement ou indirectement par un utilisateur qui lui-même est en mouvement, ou que ce terminal mobile est en utilisation (jeu, SMS, en communication par exemple), alors le terminal mobile est considéré en période d'emploi.

De préférence, durant une période d'emploi du terminal mobile, la fréquence d'envoi des messages de contrôle est celle qui est spécifiée, par défaut, par le protocole de communication en utilisation par le terminal mobile.

Durant une période de non-emploi du terminal mobile, la fréquence d'envoi des messages de contrôle est différente de celle qui est définie par le protocole de communication en utilisation par le terminal mobile.

La périodicité d'émission des messages de contrôle dans une période de non-emploi du terminal mobile est notamment supérieure à celle qui est définie par le protocole de communication en utilisation par le terminal mobile.

En particulier, pendant une période de non-emploi, les interactions réseaux du terminal mobile sont limitées, voire régulièrement ou complètement arrêtées, afin de conserver au mieux son énergie.

Le fait que le terminal transmette moins fréquemment de messages de contrôle en période de non-emploi permet d'économiser l'énergie embarquée. Ceci peut être, notamment, combiné avec d'autres mesures d'économie d'énergie (écran de visualisation éteint, signalisation des appels désactivée, mode silencieux activé, signalisation d'appel par vibreur désactivé par exemple).

Il en résulte que la périodicité d'envoi des messages de contrôle, en destination du réseau de communication auquel est connecté le terminal mobile, varie d'une période d'emploi à une période de non-emploi du terminal mobile. Autrement dit, la fréquence d'envoi, par le terminal mobile, des messages de contrôle est dépendante du mouvement du terminal mobile. La mobilité et la manipulation du terminal mobile sont prises en compte dans la détermination de la fréquence d'envoi des messages de contrôle.

Un terminal mobile doit émettre des messages de contrôle suffisamment souvent pendant une période d'emploi, tout en émettant suffisamment peu en période de non-emploi.

Pour cela, le terminal mobile est pourvu :
- d'un capteur de mouvement ;
- d'un temporisateur ; et
- d'une unité logique de traitement.

Le capteur de mouvement est apte à déceler le mouvement du terminal mobile. Le capteur de mouvement permet, par exemple, de détecter le fait
- qu'une pression (toucher) soit exercée sur le terminal mobile;
- ou que le terminal mobile est tout simplement en déplacement.

De préférence, le capteur de mouvement est un capteur de mouvement triaxial, miniature et MEMS (pour Micro-Electro Mechanical Systems). L'accéléromètre triaxial LIS331DLH commercialisé par STMicroelectronics™ est un exemple du capteur de mouvement.

Les informations recueillies en temps réel par le capteur de mouvement sont mises en correspondance, à l'aide de l'unité logique, avec soit une période d'emploi ou une période de non-emploi du terminal mobile. En effet, l'unité logique de traitement des informations captées par le capteur de mouvement permet :
- d'arrêter/démarrer l'interface radio du terminal mobile ;
- de configurer le capteur de mouvement : changer la sensibilité du capteur de mouvement; traiter (réduire, amplifier, calibrer, moyenner par exemple) les mesures renvoyées par le capteur de mouvement;
- de déclencher/arrêter un temporisateur qui permet de dater les mouvements détectés par le capteur de mouvement;
- de décider sur le type de la période du terminal mobile (période d'emploi ou période de non-emploi), cette décision étant obtenue par comparaison, en fonction du temps du temporisateur, entre les mesures (brutes ou modifiées) renvoyées depuis le capteur de mouvement et des valeurs prédéfinies qui peuvent être modifiées par l'utilisateur.

Dans un mode de réalisation, l'unité logique permet, en outre,
- d'informer le réseau de communication, suivant le protocole de communication en utilisation, d'une nouvelle fréquence d'envoi des messages de contrôle à utiliser par le terminal mobile ; et
- de modifier la fréquence d'envoi des messages de contrôle.

L'unité logique peut être paramétrée via une interface graphique utilisateur adaptée au terminal mobile. Cette interface graphique comprend des instructions pour :
- configurer le capteur de mouvement : définir un calendrier fixant un séquencement dans le temps du fonctionnement du capteur de mouvement, spécifier le nombre de mesures par heure, par exemple, à effectuer par le capteur de mouvement ;
- arrêter/démarrer le capteur de mouvement ;
- changer la sensibilité du capteur : par exemple, définir un seuil minimal à partir duquel un mouvement est détecté ;
- définir au moins un intervalle de temps minimal pendant lequel aucun mouvement du terminal mobile n'est détecté pour transiter d'une période d'emploi à une période de non-emploi du terminal mobile ;
- spécifier une temporisation (une durée) **PNE** (Période de Non-Emploi) d'une période de non-emploi du terminal mobile;
- spécifier une temporisation (une durée) **PE** (Période d'Emploi) d'une période d'emploi du terminal mobile ;
- fixer un séquencement dans le temps des périodes d'emploi et de non-emploi du terminal mobile ;
- indiquer les conditions à satisfaire pour passer d'une période d'emploi à une période de non-emploi, ou inversement, du terminal mobile (intensité du mouvement détecté, le temps actuel du temporisateur par exemple) ;
- paramétrer la signalisation (vibreur, sonnerie, signal lumineux par exemple) des appels reçus pendant une période de non-emploi du terminal mobile. Ces appels, s'ils existent, sont synthétisés suite à toute transition d'une période de non-emploi à une période d'emploi du terminal mobile;
- activer/désactiver la distinction entre périodes d'emploi et périodes de non-emploi du terminal mobile.

Dans un mode de réalisation, l'interface graphique permet, en outre,
- de définir une ou plusieurs fréquences d'envoi des messages de contrôle ;
- d'interroger un agenda électronique et en extraire, pour un événement préenregistré, des données incluant par exemple des correspondances entre fréquences d'envoi des messages de contrôle et intensité du mouvement décelé, des périodes de non-emploi prédéfinies (réunion, de 22h à 8h chaque jour par exemple) ; et éventuellement d'autres mesures d'économie d'énergie.

On se réfère maintenant à la figure 1, qui illustre une procédure de transition d'une période d'emploi à une période de non-emploi et inversement, selon un mode de réalisation utile à la compréhension de l'invention.

Si le terminal mobile est en période d'emploi 1, qui est marquée par une interface radio active, alors tant que, selon un premier test 11, le terminal mobile est en communication ou qu'un mouvement est en détection par le capteur de mouvement 3, alors le terminal mobile demeure en période d'emploi 1 et le premier test 11 reste infranchi.

Dès que, selon le premier test 11, le capteur de mouvement 3 ne détecte aucun mouvement et que le terminal mobile n'est pas en communication, alors un temporisateur est armé à une durée prédéfinie **PE** (étape 4 de la figure 1).

Au déclenchement de la temporisation **PE**, un second test 12 est activé. Dès qu'un mouvement est détecté, selon ce second test 12, le terminal mobile est renvoyé de nouveau en période d'emploi 1. Sinon si, selon un troisième test 13, la temporisation **PE** est atteinte sans qu'aucun mouvement ne soit détecté, selon le second test 12, le long de la temporisation **PE,** alors le terminal mobile est supposé en période de non-emploi 2 pendant laquelle
- l'interface radio est arrêtée ; et
- un temporisateur est armé à une durée prédéfinie **PNE**.

Etant donné que le terminal mobile est en période de non-emploi 2, tant que, selon un quatrième test 14, le capteur de mouvement 3 ne détecte aucun mouvement et que, selon le cinquième test 15, la temporisation **PNE** n'est pas encore atteinte, le terminal mobile demeure en période de non-emploi 2.

Les tests 11, 12 et 14 peuvent être programmés dans l'unité logique de sorte qu'ils ne décident d'une détection de mouvement que lorsque, par exemple,
- l'intensité du mouvement décelé par le capteur du mouvement 3 est supérieure à un certain seuil ;
- l'intensité du mouvement décelé par le capteur de mouvement 3 est comprise entre deux valeurs prédéfinies.

Le terminal mobile demeure en période de non-emploi 2 le long de la temporisation **PNE**, autrement dit l'interface radio du terminal mobile demeure éteinte, tant qu'aucun mouvement du terminal mobile n'est encore détecté, selon le quatrième test 14, le long de la temporisation **PNE**.
Dans le cas où
- le temps **t** du temporisateur atteint, selon le cinquième test 15, la temporisation **PNE** de la période de non-emploi ; ou
- un mouvement du terminal mobile est détecté selon le quatrième test 14
alors, le terminal mobile entame une période d'emploi 1 marquée par le démarrage de l'interface radio. Durant cette période, le terminal reprend son fonctionnement normal.

Il est a noté que les appels reçus pendant la période de non-emploi 2 du terminal mobile et qui ne sont pas encore acquittés par l'utilisateur, sont synthétisés par le terminal dès son passage en période d'emploi 1 (étape 5 de la figure 1).

Par « appel » on désigne, ici, aussi bien un message texte (par exemple SMS), un message audio (par exemple sur messagerie vocale), un courrier électronique, ou une notification interne générée par le terminal mobile (une note d'agenda par exemple).

La signalisation des appels est re-effectuée dès que le terminal mobile est en période d'emploi 1, ce qui augmente les chances, pour l'utilisateur, d'être averti au plus tôt des messages importants (SMS, MMS, courrier électronique, rappel d'agenda électronique, un message vocal, un appel en absence, une notification de la part du réseau de communication).

Etant donné que le terminal mobile est en période d'emploi 1, si selon le premier test 11, le terminal mobile n'est pas en communication et qu'aucun mouvement n'est détecté, alors le terminal mobile demeure en période d'emploi 1 tant que le temps **t** du temporisateur n'a pas atteint la temporisation **PE** ou qu'un mouvement est détecté selon le second test 12.

Dans le cas où le temps t du temporisateur atteint la temporisation **PE** de la période d'emploi 1 sans qu'aucun mouvement ne soit détecté le long de cette temporisation **PE,** alors le terminal mobile entame une temporisation **PNE** de période de non-emploi 2. Le terminal mobile continue dans cette période de non-emploi 2 tant qu'aucun mouvement n'est encore détecté le long de cette temporisation **PNE**.

Dans un autre mode de réalisation, en période de non-emploi 2 du terminal mobile, une fréquence d'envoi des messages de contrôle inférieure à celle qui est utilisée en période d'emploi 1 est sélectionnée, sans éteindre l'interface radio. Pour cela, au début d'une période de non-emploi 2, l'interface radio
- informe le réseau de communication de la modification de sa fréquence d'envoi des messages de contrôle ; ensuite
- change sa fréquence d'envoi des messages de contrôle.

En variante, tant
- que le terminal est en période de non-emploi 2; et
- qu'aucun mouvement n'est décelé, selon le cinquième test 15, par le capteur 3 de mouvement,
le terminal mobile demeure en période de non-emploi (interface radio éteinte), même si le temps **t** du temporisateur dépasse la temporisation **PNE** de la période de non-emploi.

En variante, le procédé qui vient d'être décrit peut prendre en compte, en outre du mouvement du terminal mobile, un calendrier de séquencement préenregistré de transition entre périodes d'emploi et périodes de non-emploi.

En variante ou en combinaison, le procédé qui vient d'être décrit met en oeuvre d'autres capteurs que le capteur de mouvement (un accéléromètre), tels qu'un capteur de proximité ou un capteur de contact.

On remarque, notamment, que la fréquence d'envoi des messages de contrôle diffère
- d'une période de non-emploi dans laquelle, de préférence, aucun message de contrôle n'est émis (interface radio éteinte) ou très peu de messages de contrôle sont émis (utilisation d'une fréquence d'envoi des messages de contrôle inférieure à celle qui est définie par le protocole de communication en utilisation) ; à
- une période d'emploi dans laquelle la fréquence d'envoi des messages de contrôle est définie par le protocole de communication en utilisation par le terminal mobile.

Avantageusement, les différents modes de réalisation décrits ci-dessus permettent d'économiser la bande passante, en occupant moins de ressources fréquentielles requises pour l'envoi des messages de contrôles.

Avantageusement, les modes de réalisation qui viennent d'être décrits permettent de ne pas surcharger le réseau de communication par des messages de contrôle. En outre, du côté réseau de communication, il est plus utile d'interagir avec (en particulier localiser) régulièrement un terminal mobile en période d'emploi (en particulier, en mouvement) que d'interagir avec un terminal mobile en période de non-emploi (fixe par rapport à l'infrastructure du réseau, et donc sa localisation est inchangée dans la cache de pagination du réseau de communication).

Avantageusement, le procédé qui vient d'être décrit permet de
- réduire l'effet néfaste des ondes électromagnétiques émises par le terminal mobile sur le corps humain ; et
- réduire les problèmes d'interférence avec d'autres circuits électroniques.

## Revendications

1. Procédé d'économie d'énergie dans un terminal mobile, ce procédé comprenant
- une étape d'envoi lors d'une première période, dite période d'emploi (1) du terminal mobile, de messages de contrôle avec une première fréquence d'envoi ; et
- une étape d'envoi lors d'une deuxième période, dite période de non-emploi (2) du terminal mobile, de messages de contrôle avec une deuxième fréquence d'envoi,
la transition d'une période de non-emploi à une période d'emploi, ou inversement, étant dépendante du mouvement du terminal mobile et d'une temporisation, et les appels reçus pendant une période de non-emploi étant synthétisés par le terminal dès le passage à une période d'emploi du terminal mobile, puis signalés à l'utilisateur.

2. Procédé selon la revendication 1, **caractérisé en ce que** la transition d'une période de non-emploi à une période d'emploi est obtenue
- dès la détection d'un mouvement du terminal mobile pendant une temporisation prédéfinie de période de non-emploi ; ou
- dès l'écoulement de cette temporisation.

3. Procédé selon la revendication 1, **caractérisé en ce que** la transition d'une période d'emploi à une période de non-emploi est obtenue dès que le terminal mobile n'est pas en communication et qu'aucun mouvement du terminal mobile n'est détecté pendant une temporisation prédéfinie de période d'emploi.

4. Procédé selon la revendication 1, **caractérisé en ce que** la première fréquence d'envoi des messages de contrôle est spécifiée par le protocole de communication en utilisation par le terminal mobile.

5. Procédé selon l'une quelconque des revendications 1 à 4, **caractérisé en ce que** la deuxième fréquence d'envoi des messages de contrôle est inférieure à la première fréquence d'envoi des messages de contrôle.

6. Procédé selon l'une quelconque des revendications 1 à 5, **caractérisé en ce qu'**il comprend en outre
- une étape d'information du réseau de communication auquel le terminal mobile est connecté de l'utilisation d'une fréquence d'envoi des messages de contrôle différente de celle qui est en utilisation;
- une étape de changement de la fréquence d'envoi des messages de contrôle en utilisation par le terminal mobile.

7. Un terminal mobile comprenant
- un capteur de mouvement permettant de déceler le mouvement du terminal mobile;
- un temporisateur ;
- une unité logique utilisant les informations transmises depuis le capteur de mouvement et le temps du temporisateur et permettant de sélectionner, en conséquence, une fréquence d'envoi des messages de contrôle différente pendant une période d'emploi et une période de non-emploi du terminal mobile, de synthétiser, dès le passage à la période d'emploi, des appels reçus pendant la période de non-emploi du terminal mobile et de signaler les appels reçus à l'utilisateur.

8. Terminal mobile de la revendication 7, **caractérisé en ce que** la fréquence d'envoi des messages de contrôle sélectionnée est spécifiée par le protocole de communication en utilisation par le terminal mobile.

9. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 6.

## Patentansprüche

1. Verfahren zum Sparen von Energie in einem mobilen Endgerät, wobei dieses Verfahren umfasst:
- einen Sendeschritt, während eines
ersten Zeitraums, bezeichnet als Verwendungszeitraum (1) des mobilen Endgeräts, von Kontrollnachrichten mit einer ersten Sendefrequenz; und
- einen Sendeschritt, während eines
zweiten Zeitraums, bezeichnet als Nichtverwendungszeitraum (2) des mobilen Endgeräts, von Kontrollnachrichten mit einer zweiten Sendefrequenz,
wobei der Übergang von einem Nichtverwendungszeitraum in einen Verwendungszeitraum oder umgekehrt von der Bewegung des mobilen Endgeräts und von einem Timing abhängt, und die während eines Nichtverwendungszeitraums erhaltenen Anrufe von dem Endgerät ab dem Übergang in einen Verwendungszeitraum des mobilen Endgeräts zusammengefasst, dann dem Benutzer mitgeteilt werden.

2. Verfahren nach Anspruch 1, **dadurch gekennzeichnet, dass** der Übergang von einem Nichtverwendungszeitraum in einen Verwendungszeitraum erhalten wird
- ab der Ermittlung einer Bewegung des mobilen Endgeräts während eines vorbestimmten Timings eines Nichtverwendungszeitraums; oder
- ab dem Ablauf dieses Timings.

3. Verfahren nach Anspruch 1, **dadurch gekennzeichnet, dass** der Übergang von einem Verwendungszeitraum in einen Nichtverwendungszeitraum erhalten wird, sobald das mobile Endgerät nicht in Kommunikation ist und keine Bewegung des mobilen Endgeräts während eines vorbestimmten Timings eines Verwendungszeitraums ermittelt wird.

4. Verfahren nach Anspruch 1, **dadurch gekennzeichnet, dass** die erste Sendefrequenz der Kontrollnachrichten von dem Kommunikationsprotokoll spezifiziert wird, welches das mobile Endgerät benutzt.

5. Verfahren nach einem der Ansprüche 1 bis 4, **dadurch gekennzeichnet, dass** die zweite Sendefrequenz der Kontrollnachrichten niedriger als die erste Sendefrequenz der Kontrollnachrichten ist.

6. Verfahren nach einem der Ansprüche 1 bis 5, **dadurch gekennzeichnet, dass** es ferner umfasst:
- einen Informationsschritt des Kommunikationsnetzes, mit dem das mobile Endgerät verbunden ist, über die Benutzung einer Sendefrequenz der Kontrollnachrichten, die sich von der unterscheidet, die benutzt wird;
- einen Änderungsschritt der Sendefrequenz der Kontrollnachrichten, die von dem mobilen Endgerät benutzt wird.

7. Mobiles Endgerät, umfassend
- einen Bewegungssensor, der erlaubt, die Bewegung des mobilen Endgeräts zu verfolgen;
- einen Timer;
- eine logische Einheit, welche die von dem Bewegungssensor übertragenen Informationen und die Zeit des Timers benutzt und folglich erlaubt, eine Sendefrequenz der Kontrollnachrichten auszuwählen, die sich während eines Verwendungszeitraums und eines Nichtverwendungszeitraums des mobilen Endgeräts unterscheidet, ab dem Übergang in den Verwendungszeitraum während des Nichtverwendungszeitraums des mobilen Endgeräts erhaltene Anrufe zusammenzufassen und dem Benutzer die erhaltenen Anrufe mitzuteilen.

8. Mobiles Endgerät von Anspruch 7, **dadurch gekennzeichnet, dass** die ausgewählte Sendefrequenz der Kontrollnachrichten von dem Kommunikationsprotokoll spezifiziert wird, welches das mobile Endgerät benutzt.

9. Rechnerprogrammprodukt, implementiert auf einem Speicherträger, das imstande ist, innerhalb einer Informatikverarbeitungseinheit umgesetzt zu werden und Befehle für die Umsetzung eines Verfahrens nach einem der Ansprüche 1 bis 6 umfasst.

## Claims

1. A method of saving energy in a mobile terminal, this method comprises
- a step of sending, during a
first period, called the usage period (1) of the mobile terminal,
of control messages with a first sending frequency; and
- a step of sending, during a
second period, called the non-usage period (2) of the
mobile terminal, of control messages with a second sending frequency,
the transition from a non-usage period to a usage period, or vice versa, being dependent on the movement of the mobile terminal and on a time delay, and the calls received during a period of non-usage being summarized by the terminal once it moves to a usage period, then reported to the user.

2. A method according to claim 1, **characterized in that** the transition from a non-usage period to a usage period is obtained
- once movement of the mobile terminal is detected during a predefined time delay of the non-usage period; or
- once that time delay has elapsed.

3. A method according to claim 1, **characterized in that** the transition from a usage period to a non-usage period is obtained once the mobile terminal Is not in communication, and that no movement of the mobile terminal is detected during a predefined time delay of the usage period.

4. A method according to claim 1, **characterized in that** the first sending frequency of the control messages is specified by the communication protocol in use by the mobile terminal.

5. A method according to one of the claims 1 to 4, **characterized in that** the second sending frequency of control messages is less than the first sending frequency of control messages.

6. A method according to any one of the claims 1 to 5, **characterized in that** it further comprises
- a step of informing the communication network to which the mobile terminal is connected of the use of a sending frequency of control messages different from the one that is in use;
- a step of changing the sending frequency of control messages in use by the mobile terminal.

7. A mobile terminal comprising
- a motion sensor that makes it possible to detect the movement of the mobile terminal
- a timer;
- a logic unit using the information transmitted from the motion sensor and the time from the timer and making it possible to accordingly select a frequency for sending different control messages for a usage period and non-usage period of the mobile terminal, to summarize, upon switching to the usage period, the calls received during the non-usage period of the mobile terminal, and to report the received calls to the user.

8. A mobile terminal according to claim 7, **characterized in that** the frequency of sending the selected control messages is specified by the communication protocol in use by the mobile terminal.

9. A computer program product implemented on a memory medium, capable of being implemented within a computer processing unit and comprising instructions for implementing the method according to one of the claims 1 to 6.
